# EUROPEAN PATENT APPLICATION

(11) **EP 4 822 498 A1**
(43) Date of publication of application: **14.10.2026**
(21) Application number: 24900653.7
(22) Date of filing: 04.12.2024
(51) Int. Cl.: G06F 3/041, B32B 17/10, C03C 27/12, G09F 9/00

(54) **INTERLAYER FILLER, LAMINATED GLASS, IMAGE DISPLAY DEVICE, AND TOUCH PANEL**

(30) Priority: 08.12.2023 JP 2023207687
(71) Applicant: Sekisui Chemical Co., Ltd., Osaka-shi, Osaka 530-8565 (JP)
(72) Inventor: MINAMI, Kuon, Koka-shi, Shiga 528-8585 (JP); TONARU, Daisuke, Koka-shi, Shiga 528-8585 (JP); NOHARA, Atsushi, Suzhou-shi, Jiangsu 215129 (CN)
(74) Representative: Osha BWB
(86) International application number: PCT/JP2024/042907
(87) International publication number: WO 2025/121359

(57) **Abstract**

In an interlayer filler according to the present invention, the range of the relative permittivity when the moisture content is 0% is 2.0 or more and 5.0 or less, the range of the relative permittivity when the moisture content is 0.5% is 2.5 or more and 5.5 or less, and the relative permittivity when the moisture content is 0.5% is larger than the relative permittivity when the moisture content is 0%.According to the present invention, it is possible to provide an interlayer filler in which the relative permittivity can be adjusted to a desired range even when the material system of a resin composition for forming an interlayer filler is the same.

## Description

### [TECHNICAL FIELD]

The present invention relates to an interlayer filler, a laminated glass, an image display device, and a touch panel.

### [BACKGROUND ART]

Touch panels that allow input operations to be performed by touching a screen are used in in-vehicle displays, tablet computers, and smartphones, etc.

Touch panels are equipped with various components such as a touch sensor and a front panel, and interlayer fillers are used as an adhesive (or bonding agent) to secure the various components. For example, Patent Document 1 describes an invention relating to an adhesive composition for touch panels that contains a compound having a glycidyl ether group and an alkoxysilyl group in the molecule thereof, an epoxy resin, a phenolic curing agent, and a filler.

### [PRIOR ART DOCUMENTS]

### [PATENT DOCUMENTS]

Patent Document 1: Japanese Patent Application Laid-Open Publication No. 2010-90320

### [SUMMARY OF THE INVENTION]

### [TECHNICAL PROBLEM TO BE SOLVED BY THE INVENTION]

In recent years, capacitive touch panel modules have adopted an on-cell or in-cell structure, i.e., a structure having a touch sensor directly patterned on a liquid crystal display (LCD). One of the drawbacks of these structures is that the distance between the touch sensor and the front panel is greater than in conventional structures, which tends to reduce the sensitivity of the touch sensor. In addition, since the distance between the touch sensor and the front panel, and the material of the front panel differ depending on the type of touch panel module, thus, an interlayer filler with a thickness and relative permittivity appropriate for each type is required in order to realize touch panels with excellent operation sensitivity.

In order to realize touch panels with excellent operation sensitivity, interlayer fillers having appropriate relative permittivity depending on the type of touch panel module or the location in the touch panel where the interlayer filler is attached, are required.

However, when attaching interlayer fillers of different material systems (different relative permittivities), the number of types of interlayer fillers that need to be handled increases, making management and design more complicated. In addition, if the amount of metal additive added is adjusted when fine-tuning the relative permittivity, the optical properties are likely to change significantly, which may make management and design more complicated.

Therefore, an object of the present invention is to provide an interlayer filler in which the relative permittivity can be adjusted to a desired range even when the material system of a resin composition for forming the interlayer filler is the same.

### [SOLUTION TO PROBLEM]

The present inventors have conducted extensive research to solve the above problems. As a result, they have found that the above-mentioned problems can be solved by an interlayer filler in which the range of the relative permittivity (1 MHz) at a moisture content of 0% is 2.0 or more and 5.0 or less, the range of the relative permittivity (1 MHz) at a moisture content of 0.5% is 2.5 or more and 5.5 or less, and the relative permittivity (1 MHz) at a moisture content of 0.5% is greater than the relative permittivity (1 MHz) at a moisture content of 0%, and have completed the present invention as described below.

More specifically, the gist of the present invention is as described in [1] to [13] below.
[1] An interlayer filler, wherein the range of the relative permittivity at 1 MHz is 2.0 or more and 5.0 or less when the moisture content is 0%, the range of the relative permittivity at 1 MHz is 2.5 or more and 5.5 or less when the moisture content is 0.5%, and the relative permittivity when the moisture content is 0.5% is greater than the relative permittivity when the moisture content is 0%.
[2] The interlayer filler according to [1] above, wherein the relative permittivity is 3.9 or more.
[3] The interlayer filler according to [1] or [2] above, wherein the thickness is 380 µm or more and 760 µm or less.
[4] The interlayer filler according to [1] above, wherein the relative permittivity is less than 3.9.
[5] The interlayer filler according to [4] above, wherein the thickness is 380 µm or more and 760 µm or less.
[6] The interlayer filler according to any one of [1] to [5] above, comprising a thermoplastic resin.
[7] The interlayer filler according to any one of [1] to [6] above, further comprising a plasticizer.
[8] A laminate comprising the interlayer filler according to any one of [1] to [7] above, and at least one transparent substrate.
[9] A laminated glass comprising the interlayer filler according to any one of [1] to [7] above.
[10] An image display device comprising the interlayer filler according to any one of [1] to [7] above.
[11] A touch panel comprising at least a first substrate, a first interlayer filler, a second substrate, a second interlayer filler, and a touch sensor, in that order, wherein the relative permittivity of the first interlayer filler and the second interlayer filler is different, and the material system of a resin composition constituting the first interlayer filler and the second interlayer filler is the same.
[12] The touch panel according to [11] above, wherein the moisture content of the first interlayer filler and the second interlayer filler is different.
[13] The touch panel according to [11] or [12] above, wherein the thickness of the first interlayer filler and the second interlayer filler is different.

### [EFFECT OF THE INVENTION]

In the present invention, it is possible to provide an interlayer filler in which the relative permittivity can be adjusted to a desired range even when the material system of a resin composition for forming the interlayer filler is the same.

### [BRIEF DESCRIPTION OF THE DRAWINGS]

[Fig. 1] is a graph showing the relationship between moisture content and relative permittivity.
[Fig. 2] is a schematic cross-sectional view showing an embodiment of a laminate.
[Fig. 3] is a schematic cross-sectional view showing an embodiment of a laminate.
\[Fig. 4] is a schematic cross-sectional view showing an embodiment of a laminate.

### [DETAILED DESCRIPTION OF THE INVENTION]

### <Interlayer filler>

In the interlayer filler of the present invention, the range of the relative permittivity at 1 MHz is 2.0 or more and 5.0 or less when the moisture content is 0%,and the range of the relative permittivity at 1 MHz is 2.5 or more and 5.5 or less when the moisture content is 0.5%. Furthermore, in the interlayer filler of the present invention, the relative permittivity at 1 MHz when the moisture content is 0.5% is greater than the relative permittivity at 1 MHz when the moisture content is 0%.

Additionally, the above 1 MHz is the frequency at which the relative permittivity is measured.

With the above-mentioned configuration, it is possible to provide an interlayer filler in which the relative permittivity can be adjusted to a desired range even when the material system of a resin composition for forming the interlayer filler is the same.

Therefore, interlayer fillers with different relative permittivities can be produced by using a resin composition of the same material system, making it easier to prepare interlayer fillers according to the type of touch panel. In addition, it is easier to prepare interlayer fillers having desired relative permittivities in cases in which it is necessary to use interlayer fillers with different relative permittivities depending on the position of the interlayer filler in the touch panel.

Note that resin compositions of the same material system means that the types of the resin components contained in the resin compositions are the same, preferably that the types of the resin components and the additives in the resin compositions are the same, and more preferably that other than the moisture content, the compositions of the resin compositions are all the same.

From the viewpoint of further enhancing the effect of the present invention, the relative permittivity of the interlayer filler of the present invention is preferably 2.1 or more and 4.9 or less, and more preferably 2.2 or more and 4.8 or less when the moisture content is 0%. In addition, when the moisture content is 0.5%, the relative permittivity is preferably 2.6 or more and 5.3 or less, and more preferably 2.6 or more and 5.1 or less.

As described above, in the interlayer filler of the present invention, the relative permittivity when the moisture content is 0.5% is greater than the relative permittivity when the moisture content is 0%.

The difference between the relative permittivity when the moisture content is 0.5% and the relative permittivity when the moisture content is 0% is preferably 0.1 or more, more preferably 0.2 or more, and preferably 0.5 or less.

Methods for adjusting the relative permittivity of the interlayer filler when the moisture content is 0% and 0.5%, and adjusting the difference between these relative permittivities as described above include methods for adjusting the constitution of a resin composition used in the interlayer filler, the thickness of the interlayer filler, etc.

In addition, when the moisture content of the interlayer filler of the present invention is defined as X (%) and the relative permittivity is defined as Y, it is preferable that the following formulae (1) and (2) are satisfied. $Y ≧ 0.66 X + 2.28$ Formula (1) $Y ≦ 0.46 X + 4.80$ Formula (2)

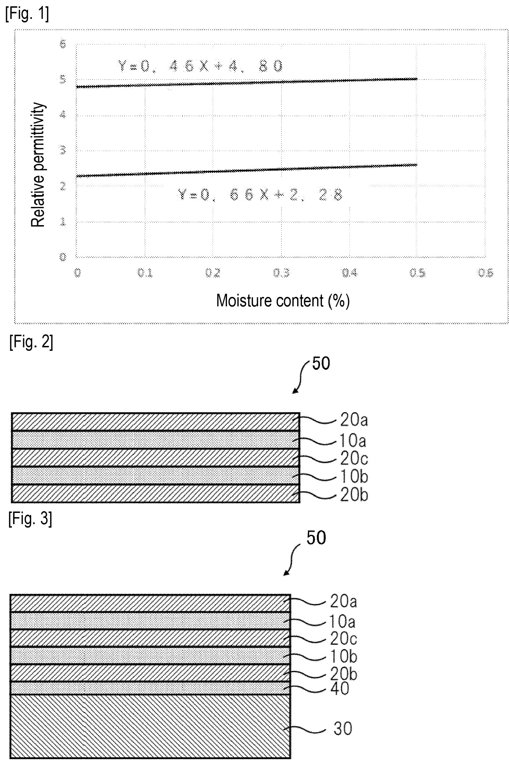

The range in which formulae (1) and (2) are satisfied is the region between the two straight lines in Fig. 1. From the viewpoint of suppressing whitening of the interlayer filler, it is preferable that the moisture content is adjusted to a certain level or lower. From this viewpoint, the moisture content (X) is preferably 0% or more and 1% or less, more preferably 0% or more and 0.7% or less, and still more preferably 0% or more and 0.5% or less.

When the interlayer filler of the present invention is used in a touch panel, the appropriate relative permittivity differs depending on the arrangement in the touch panel, i.e., whether it is disposed on a side closer to a part of the surface operated by a finger, or on a side closer to a liquid crystal display. A high relative permittivity is preferable in the former case, and a low relative permittivity is preferable in the latter.

Therefore, in the interlayer filler of the present invention, it is preferable that the relative permittivity can be adjusted to be either low or high.

From this viewpoint, when adjusting the relative permittivity to be low, the relative permittivity of the interlayer filler of the present invention is preferably less than 3.9, more preferably 3.5 or less, and still more preferably 3 or less, and is preferably 1.5 or more, and more preferably 2.0 or more.

In addition, when adjusting the relative permittivity to be high, the relative permittivity of the interlayer filler of the present invention is preferably 3.9 or more, more preferably 4 or more, still more preferably 4.5 or more, and is preferably 6.0 or less, and more preferably 5.5 or less.

### (Thermoplastic Resin)

The interlayer filler preferably contains a thermoplastic resin as a resin component. From the viewpoint of adjusting the relative permittivity at each of the above-mentioned moisture contents of 0% and 0.5% to be within the desired ranges, the thermoplastic resin contained in the interlayer filler is preferably a polyvinyl acetal resin, and among these, a polyvinyl butyral resin is more preferable.

When such a resin is used, it is easier to adjust the relative permittivity to the desired range by using the moisture content of the interlayer filler, and it is also easier to adjust the relative permittivity by using the thickness of the interlayer filler. Furthermore, when such a resin is used, the impact energy absorption of the interlayer filler is improved.

### (Polyvinyl Acetal Resin)

The polyvinyl acetal resin used as the thermoplastic resin of the interlayer filler may be a modified polyvinyl acetal resin or an unmodified polyvinyl acetal resin.

As will be mentioned later, modified polyvinyl acetal resins only need to have an acetal group, a hydroxyl group, and a structure (modified group) other than an acetyl group, and preferably have a modified group in a side chain.

Polyvinyl acetal resins are obtained by acetalizing polyvinyl alcohols with an aldehyde, and then, inter alia, reacting with a modifying agent, or carrying out a reacetylation treatment, if necessary. In addition, a modified polyvinyl alcohol may be used as a raw material polyvinyl alcohol for obtaining a modified polyvinyl acetal resin.

### <Degree of Acetalization>

The degree of acetalization of the polyvinyl acetal resin used as the thermoplastic resin of the interlayer filler is preferably 65 mol% or more and 75 mol% or less. When the degree of acetalization of the polyvinyl acetal resin is 65 mol% or more, the number of hydroxyl groups in the polyvinyl acetal resin is reduced, and the polyvinyl acetal resin has sufficient flexibility. In addition, when the degree of acetalization of the polyvinyl acetal resin is 75 mol% or less, the adhesion to transparent substrates such as glass is good.

From this viewpoint, the degree of acetalization of the polyvinyl acetal resin is more preferably 67 mol% or more and 74 mol% or less, still more preferably 68 mol% or more and 73 mol% or less, and even more preferably 69 mol% or more and 72 mol% or less.

Note that the degree of acetalization means the degree of butyralization when the acetal group is a butyral group and the polyvinyl acetal resin is a polyvinyl butyral resin.

The above-mentioned degree of acetalization is a value expressed as a percentage of a molar fraction obtained by subtracting the amount of ethylene groups bonded to hydroxyl groups and the amount of ethylene groups bonded to acetyl groups from the total amount of ethylene groups in the main chain, and dividing by the total amount of ethylene groups in the main chain. For example, the degree of acetalization (degree of butyralization) may be calculated from the results of measurements made in accordance with JIS K6728 "Testing Methods for Polyvinyl Butyral".

### <Aldehyde>

The polyvinyl acetal resin used as the thermoplastic resin of the interlayer filler is preferably a polyvinyl acetal resin obtained by acetalizing a polyvinyl alcohol (PVA) with an aldehyde. The aldehyde is not particularly limited, but generally, an aldehyde having 1 to 10 carbon atoms is preferably used. The aldehyde having 1 to 10 carbon atoms is not particularly limited, and examples thereof include n-butyl aldehyde, isobutyraldehyde, n-valeraldehyde, 2-ethylbutyraldehyde, n-hexyl aldehyde, n-octyl aldehyde, n-nonyl aldehyde, n-decyl aldehyde, formaldehyde, acetaldehyde, benzaldehyde, and the like. These aldehydes may be used independently, or two or more may be used in combination.

Among the above, n-butylaldehyde, n-hexylaldehyde, and n-valeraldehyde are preferable, and n-butylaldehyde is more preferable.

Therefore, the polyvinyl acetal resin is preferably a polyvinyl butyral resin.

### <Polyvinyl Alcohol (PVA)>

A polyvinyl alcohol (PVA) can be obtained, for example, by saponifying a polyvinyl ester such as polyvinyl acetate. The degree of saponification of polyvinyl alcohol is generally 70 to 99.9 mol%.

The average degree of polymerization of the PVA is preferably 200 or more, more preferably 500 or more, still more preferably 1,000 or more, and even more preferably 1,500 or more. When the average degree of polymerization is greater than or equal to the above-mentioned lower limit, the penetration resistance of a laminated glass is increased when used in a laminated glass. In addition, the average degree of polymerization of the PVA is preferably 5,000 or less, more preferably 4,000 or less, still more preferably 3,500 or less, and even more preferably 2,500 or less.

Additionally, the average degree of polymerization of the polyvinyl alcohol is determined by a method in accordance with JIS K6726 "Testing Method for Polyvinyl Alcohol".

### <Hydroxyl Group Amount>

The hydroxyl group amount of the polyvinyl acetal resin used as the thermoplastic resin of the interlayer filler is preferably 15 mol% or more, and preferably 38 mol% or less.

As a result of setting the hydroxyl group amount to be 15 mol% or more, it is easier to achieve good adhesion to a transparent substrate. In addition, as a result of setting the hydroxyl group amount to 38 mol% or less, it is easier to ensure flexibility.

The hydroxyl group amount is more preferably 20 mol% or more, and still more preferably 25 mol% or more. In addition, the hydroxyl group amount is more preferably 35 mol% or less, and still more preferably 33 mol% or less.

From the same viewpoint, when a polyvinyl butyral resin is used as the polyvinyl acetal resin, the hydroxyl group amount is 15 mol% or more, and preferably 38 mol% or less, more preferably 20 mol% or more, and still more preferably 25 mol% or more, and more preferably 35 mol% or less, and still more preferably 33 mol% or less.

The amount of hydroxyl groups in the polyvinyl acetal resin is a value expressed as a percentage of a molar fraction obtained by dividing the amount of ethylene groups bonded to hydroxyl groups by the total amount of ethylene groups in the main chain.

For example, the amount of ethylene groups bonded to hydroxyl groups can be measured in accordance with JIS K6728 "Testing Methods for Polyvinyl Butyral."

### <Degree of Acetylation>

The degree of acetylation of the polyvinyl acetal resin used as the thermoplastic resin of the interlayer filler is preferably 30 mol% or less, more preferably 20 mol% or less, still more preferably 10 mol% or less, and even more preferably 2 mol% or less. When the degree of acetylation is less than or equal to the above-mentioned upper limit, the moisture resistance of the interlayer filler is increased. In addition, the degree of acetylation is not particularly limited, but is preferably 0.01 mol% or more, and more preferably 0.1 mol% or more.

The degree of acetylation is a value expressed as a percentage of a molar fraction obtained by dividing the amount of ethylene groups bonded to acetyl groups by the total amount of ethylene groups in the main chain. For example, the amount of ethylene groups bonded to acetyl groups can be measured in accordance with JIS K6728 "Testing Methods for Polyvinyl Butyral."

### <Modified Polyvinyl Acetal Resin>

The polyvinyl acetal resin used as the thermoplastic resin of the interlayer filler is preferably an unmodified polyvinyl acetal resin, but may also be a modified polyvinyl acetal resin.

The modified polyvinyl acetal resin has an acetal group, a hydroxyl group, and a structure (modified group) other than an acetyl group, and preferably has a modified group in a side chain. Examples of the modified group include those having a polyalkylene oxide structure in a side chain, and those having, in a side chain, an alkyl group other than an acetal group and an acetyl group (e.g., about 2 to 30 carbon atoms).

Preferred modified polyvinyl acetal resins include polyalkylene oxide-modified polyvinyl acetal resins, and more preferred modified polyvinyl acetal resin include polyethylene oxide-modified polyvinyl acetal resins.

The amount of modification is not particularly limited, but is, for example, 0.1 mol% or more to about 10 mol%. The amount of modification represents the ratio of functional groups relative to total amount of all vinyl monomer units constituting the polyvinyl acetal resin.

### (Plasticizer)

In addition to the thermoplastic resin, the interlayer filler preferably contains a plasticizer as an additive. As a result of including a plasticizer, the interlayer filler is more flexible and has increased impact energy absorption.

Examples of plasticizers include, e.g., organic ester plasticizers, and organic phosphorus-based plasticizers such as organic phosphate ester plasticizers and organic phosphite ester plasticizers, organic ether-based plasticizers such as polyalkylene glycol-based plasticizers and polyoxyalkylene ether-based plasticizers, and alcohol-based plasticizers, etc.

One type of plasticizer may be used individually, or two or more types may be used in combination. Of the above, organic ester plasticizers and organic ether-based plasticizers are preferable.

Preferred organic ester plasticizers include monobasic organic acid esters and polybasic organic acid esters, etc. Examples of monobasic organic acid esters include esters of glycols and monobasic organic acids. Examples of glycols include polyalkylene glycols in which each alkylene unit has 2 to 4 carbon atoms, and preferably 2 or 3 carbon atoms, and the number of repeating alkylene units is 2 to 10, and preferably 2 to 4. In addition, examples of glycols also include monoalkylene glycols (i.e., one repeating unit) having 2 to 4 carbon atoms, and preferably 2 or 3 carbon atoms.

Specifically, examples of glycols include ethylene glycol, diethylene glycol, triethylene glycol, tetraethylene glycol, propylene glycol, dipropylene glycol, tripropylene glycol, tetrapropylene glycol, and butylene glycol, etc.

Examples of monobasic organic acids include organic acids having 3 to 10 carbon atoms, and specifically, include butyric acid, isobutyric acid, caproic acid, 2-ethylbutyric acid, heptanoic acid, n-octanoic acid, 2-ethylhexanoic acid, n-nonanoic acid, and decanoic acid, etc.

Specific examples of monobasic organic acids include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, ethylene glycol di-2-ethylbutyrate, 1,2-propylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, and the like.

In addition, examples of polybasic organic acid esters include, e.g., ester compounds of dibasic organic acids having 4 to 12 carbon atoms, such as adipic acid, sebacic acid, and azelaic acid, with alcohols having 4 to 10 carbon atoms. The alcohols having 4 to 10 carbon atoms may be linear, or have branched or cyclic structures.

Specifically, examples include dibutyl sebacate, dioctyl azelaate, dihexyl adipate, dioctyl adipate, hexylcyclohexyl adipate, diisononyl adipate, heptylnonyl adipate, dibutyl carbitol adipate, and mixed adipates, etc. In addition, oil-modified alkyd sebacates, etc., are also acceptable. Examples of mixed adipates include adipates made from two or more alcohols selected from alkyl alcohols having 4 to 9 carbon atoms and cyclic alcohols having 4 to 9 carbon atoms.

The organic ester plasticizer is not limited to the complete esters indicated above esters, and may be a partial ester.

For example, it may be a partial ester of glycol and a monobasic organic acid, or a partial ester of a dibasic organic acid and an alcohol. Specifically, examples include triethylene glycol mono-2-ethylhexanoate.

Furthermore, it may be a partial ester of a trihydric or higher alcohol, such as glycerin, and a monobasic organic acid, etc. Examples of monobasic organic acids include monobasic organic acids having 3 to 24 carbon atoms, and preferably 6 to 18 carbon atoms. Specific examples of partial esters of a trihydric or higher alcohol and a monobasic organic acid include a mono- or diester of glycerin and stearic acid, and a mono- or diester of glycerin and 2-ethylhexanoic acid, etc.

Of the above, triethylene glycol di-2-ethylhexanoate (3GO) is particularly preferably used as the organic ester plasticizer.

Examples of organic phosphorus-based plasticizers include phosphate esters such as tributoxyethyl phosphate, isodecylphenyl phosphate, and triisopropyl phosphate, etc.

Examples of polyalkylene glycol plasticizers include polyethylene glycol, polypropylene glycol (PPG), poly(ethylene oxide/propylene oxide) block copolymers, poly(ethylene oxide/propylene oxide) random copolymers, and polytetramethylene glycol, etc., with polypropylene glycol being preferable.

A polyoxyalkylene ether-based plasticizer is an ether compound of a mono- or polyhydric alcohol and a polyoxyalkylene.

Specific examples of the polyoxyalkylene ether-based plasticizer include polyoxyethylene hexyl ether, polyoxyethylene heptyl ether, polyoxyethylene octyl ether, polyoxyethylene-2-ethylhexyl ether, polyoxyethylene nonyl ether, polyoxyethylene decyl ether, polyoxyethylene allyl ether, polyoxypropylene allyl ether, polyoxyethylene glyceryl ether, polyoxypropylene glyceryl ether, polyoxyethylene diglyceryl ether, polyoxypropylene diglyceryl ether (DGP), and polyoxyalkylene pentaerythritol ether, etc.

The polyoxyalkylene ether-based plasticizer is preferably an ether compound of a polyhydric alcohol and a polyoxyalkylene, more preferably an ether compound of glycerin or diglycerin and a polyoxyalkylene, and still more preferably an ether compound of glycerin or diglycerin and polyoxypropylene.

Examples of alcohol-based plasticizers include various polyhydric alcohols such as butanediol, hexanediol, trimethylolpropane, and pentaerythritol. Among these, trimethylolpropane is preferable.

The above-mentioned plasticizers can be used independently or two or more may be used in combination. Among the above-mentioned plasticizers, triethylene glycol-di-2-ethylhexanoate (3GO), polyoxypropylene diglyceryl ether (DGP), and polypropylene glycol (PPG) are preferable, and triethylene glycol-di-2-ethylhexanoate (3GO) is more preferable.

The content of the plasticizer in the interlayer filler is not particularly limited, but is preferably 10 parts by mass or more and 100 parts by mass or less relative to 100 parts by mass of the polyvinyl acetal resin. When the content of the plasticizer is 10 parts by mass or more, the interlayer filler is appropriately flexible, and the impact energy absorption of the interlayer filler can be further improved.

On the other hand, when the content of the plasticizer is 100 parts by mass or less, separation of the plasticizer from the interlayer filler is prevented.

The content of the plasticizer is more preferably 20 parts by mass or more, still more preferably 25 parts by mass or more, and even more preferably 30 parts by mass or more, and is more preferably 70 parts by mass or less, still more preferably 60 parts by mass or less, and even more preferably 50 parts by mass or less.

The interlayer filler is preferably mainly composed of a thermoplastic resin, or of a thermoplastic resin and a plasticizer, and the total amount of the thermoplastic resin and the plasticizer in the interlayer filler is usually 70 mass% or more, preferably 80 mass% or more, and more preferably 90 mass% or more and less than 100 mass% based on the total amount of the interlayer filler.

### (Metal-based Additive for Adjusting Relative Permittivity)

The interlayer filler of the present invention may contain a metal-based additive capable of adjusting the relative permittivity. As a result of blending a metal-based additive into the composition, it is possible to adjust the relative permittivity of the interlayer filler to be high. For example, the metal-based additive is preferably a metal oxide-based additive such as indium tin oxide (ITO), tin oxide, antimony tin oxide (ATO), indium gallium oxide (IGO), indium zinc oxide (IZO), or zinc oxide, etc.

Among these, ITO is preferable.

When a metal-based additive capable of adjusting the relative permittivity is used, the content of the metal-based additive is preferably 0.001% by mass or more, more preferably 0.005% by mass or more, and still more preferably 0.01% by mass or more, and preferably 1% by mass or less, more preferably 0.5% by mass or less, and still more preferably 0.1% by mass or less, based on the total amount of a resin composition for forming the interlayer filler.

### (Other Additives)

The interlayer filler may contain other additives in addition to the above-mentioned plasticizer and metal-based additive. Specifically, examples of other additives include adhesion modifiers, moisture resistance improvers, light stabilizers, antioxidants, dispersants, ultraviolet absorbers, infrared absorbers, heat-shielding substances, pigments, dyes, fluorescent brighteners, crystal nucleating agents, antistatic agents, antiblocking agents, refractive index adjusters, and light scattering agents, etc.

### (Thickness)

The thickness of the interlayer filler of the present invention is not particularly limited, but from the viewpoints of adjusting the relative permittivity to a desired range and ensuring impact absorption properties, it is preferably 100 µm or more, more preferably 200 µm or more, and still more preferably 380 µm or more, and it is preferably 1,000 µm or less, and more preferably 760 µm or less.

### (Film Shape)

From the viewpoint of being capable of easy attachment to a transparent substrate, the interlayer filler of the present invention preferably has a film shape. In this case, the interlayer filler of the present invention may be obtained, for example, by mixing a resin and various additives to be blended if necessary, and molding an obtained resin composition by extrusion molding, press molding, or the like.

The interlayer filler of the present invention may be a film having a single layer structure, or may be a film having a multilayer structure.

The film having a single layer structure may be composed of the thermoplastic resin described above, or may be composed of a resin composition containing additives, such as a plasticizer and a metal-based additive if necessary, in addition to a thermoplastic resin. The content of each additive in the resin composition in the single layer structure may be adjusted as described above. In addition, when the interlayer filler is a film having a multilayer structure, each layer may be composed of a thermoplastic resin as described above, or may be composed of a resin composition containing additives, such as a plasticizer and a metal-based additive if necessary, in addition to a thermoplastic resin. Additionally, in the case of a multilayer structure, the interlayer filler may have an overall constitution as described above, and the content of each component in the resin composition constituting each layer may be the content as described above.

When the interlayer filler is a film having a multilayer structure, each layer may be molded by extrusion molding, press molding, or the like, and then laminated. For example, a method for preparing two or more extruders, and co-extruding by attaching multilayer feed blocks to the tips of multiple extruders is preferable. In addition, when a plurality of layers are provided and two or more layers have the same composition, two or more layers having the same composition may be extruded from a single extruder.

### [Laminate, Laminated Glass, and Image Display Device]

The laminate of the present invention includes the interlayer filler of the present invention and at least one transparent substrate. E.g., examples of the transparent substrate include organic material substrates and an inorganic material substrates.

Examples of an organic material substrate include organic resin plates and resin films, etc. Organic resin plates are also referred to as organic glass plates. Examples of organic resin plates include, but are not limited to, polycarbonate plates, (meth)acrylic plates such as polymethyl methacrylate plates, polycarbonate plates; (meth)acrylic plates such as polymethyl methacrylate plates; acrylonitrile styrene copolymer plates; acrylonitrile butadiene styrene copolymer plates; polyester plates such as polyethylene terephthalate plates; and various organic glass plates such as fluorine-based resin plates, polyvinyl chloride plates, chlorinated polyvinyl chloride plates, polypropylene plates, polystyrene plates, polysulfone plates, epoxy resin plates, phenolic resin plates, unsaturated polyester resin plates, and polyimide resin plates. The organic resin plate may be surface treated as appropriate.

Among the above, polycarbonate plates are preferable because of their excellent transparency and impact resistance, and (meth)acrylic plates are preferable because of their high transparency, weather resistance, and mechanical strength, and among these, polycarbonate plates are more preferable. The thickness of the organic resin plate is not particularly limited, but is preferably 0.1 mm or more, and more preferably 0.4 mm or more, and is preferably 5.0 mm or less, and more preferably 3.0 mm or less.

The resin film is not particularly limited, but examples thereof include .examples thereof include (meth)acrylic resin films, polycarbonate films, polyester resin films such as polyethylene terephthalate (PET) films and polyethylene naphthalate (PEN) films, polyolefin resin films such as polyethylene films and polypropylene films, cyclic polyolefin (COP) films, triacetyl cellulose (TAC) films, polyethersulfone (PES) resin films, and polyimide resin films, etc. In addition, a surface layer composed of a hardcoat layer made of a (meth)acrylic resin may be provided on the surface of the resin film.

The thickness of the resin film is not particularly limited, but is preferably 30 µm or more, and more preferably 50 µm or more, and is preferably 500 µm or less, and more preferably 450 µm or less.

Note that a relatively thick film with low flexibility that is generally not bendable is referred to as an organic resin plate, while a relatively thin film that is generally bendable is typically referred to as a resin film, but these are not clearly distinguishable from each other.

Examples of an inorganic material substrate include inorganic glass plates. The inorganic glass plate is not particularly limited, but may, for example, be various glass plates such as float plate glass, tempered glass, colored glass, polished plate glass, patterned plate glass, wired plate glass, lined plate glass, ultraviolet absorbing plate glass, infrared reflecting plate glass, infrared absorbing plate glass, and green glass. The inorganic glass may be subjected to a surface treatment, or the like. The thickness of the inorganic glass is not particularly limited, but is preferably 0.1 mm or more, and more preferably 1.0 mm or more, and preferably 5.0 mm or less, and more preferably 3.0 mm or less.

The organic material substrate or inorganic material substrate may be provided with an electrode, a sensor, or the like, as appropriate. The electrode is constituted by a conductive layer laminated on each of the substrates.

As a sensor, a touch sensor may be laminated on each of the substrates to form a substrate equipped with a touch sensor. The touch sensor is a sensor that detects a touch input in which a finger, a touch pen, or another object approaches or touches the substrate, and is constituted by a conductive layer laminated on the substrate. An electrical change in, capacitance, current, voltage, or the like, occurs in the conductive layer when a finger, a touch pen, or another object approaches or touches the substrate, and the touch sensor detects a touch input as a result of the electrical change.

The conductive layer is not particularly limited, and any conventionally known transparent electrode material may be used without any particular limitation, and e.g., examples thereof include an indium tin oxide (ITO) conductive film, a tin oxide conductive film, a zinc oxide conductive film, and a polymer conductive film.

Among these, the inorganic material substrate is preferably selected from the group consisting of inorganic glass plates and inorganic glass plates having at least one of an electrode or a sensor attached thereto. The organic material substrate is preferably at least one selected from the group consisting of a polycarbonate plate, a (meth)acrylic plate, and a PET film, a COP film, a polycarbonate film, or a film having at least one of an electrode or a sensor attached to one of these films.

In addition, an organic material substrate (particularly a film) having a conductive layer, such as an electrode or a sensor, laminated thereon may have the above-mentioned hardcoat layer formed on a surface opposite to a surface on which a conductive layer is provided.

Although not particularly limited, the laminate preferably has a multilayer structure of three or more layers, provided with a pair of transparent substrates selected from the inorganic material substrate and the organic material substrate, and an interlayer filler disposed between the pair of transparent substrates.

In such a multilayer structure, the interlayer filler may, for example, be bonded to both of the pair of transparent substrates, such that the pair of transparent substrates are joined via the interlayer filler.

In addition, the laminate may have a structure in which another intermediate member is disposed between the pair of transparent substrates, and in such a structure, the laminate may have a multilayer structure of five or more layers in which an adhesive film is disposed between each transparent substrate and the intermediate member. In such a configuration, the adhesive film may be bonded to each transparent substrate and the intermediate member, and as a result, the transparent substrate and the intermediate member may be joined via the adhesive film.

In addition, in the multilayer structure of five or more layers described above, the adhesive film between the transparent substrate and the intermediate member may be a resin film, and at least one of them may be the interlayer filler of the present invention, but it is preferable that both of them are the interlayer filler of the present invention.

The intermediate member preferably has at least one of the inorganic material substrate and the organic material substrate described above, and at least one of the inorganic material substrate and the organic material substrate is preferably disposed at a position to which the interlayer filler of the present invention adheres.In addition, the multilayer structure of five or more layers may be provided with three or more transparent substrates, may, for example, be provided in the order of transparent substrate, transparent substrate, intermediate member, transparent substrate, and an adhesive film may be disposed between each of these members. In this case, any one of the adhesive films may be the interlayer filler of the present invention. In addition, the intermediate member may be a substrate equipped with a touch sensor as described below, but is not limited to this.

The laminate described above may constitute a laminated glass, an image display device, a touch panel, or the like. In this case, the laminated glass has the interlayer filler of the present invention. The image display device has the interlayer filler of the present invention. Furthermore, the image display device may further have a cover glass and an image display panel in addition to the interlayer filler of the present invention. In addition, the touch panel has the interlayer filler of the present invention. Furthermore, the touch panel may further have a touch sensor, a cover glass, and an image display device. However, the laminate described above is not limited to these configurations.

The image display device is preferably an in-vehicle display device, wherein it is preferably provided in a front part in front of the driver's seat, and in particular, it is preferably disposed below the windshield of an automobile and in front of either the driver's seat or a passenger seat. More specifically, the image display device is preferably disposed in a location where a conventional instrument panel would be disposed.

The laminate of the present invention can be produced, for example, by preparing the interlayer filler of the present invention and pressure-bonding each member using the prepared interlayer filler. For example, the laminate can be produced by stacking a transparent substrate, the interlayer filler of the present invention, and a transparent substrate in this order, and pressure-bonding them together. In addition, when an intermediate member is provided, it can be produced, for example, by stacking a transparent substrate, an interlayer filler, an intermediate member, an interlayer filler, and a transparent substrate in this order and pressure-bonding them together.

Next, a specific example of the laminate will be described with reference to the drawings. Fig. 2 shows an example in which the laminate is a touch panel 50. The touch panel 50 is preferably an in-vehicle touch panel. In addition, the touch panel is preferably a capacitive touch panel.

The touch panel 50 has, in this order, a first substrate 20a, a first interlayer filler 10a, a second substrate 20c, a second interlayer filler 10b, and a touch sensor 20b.

The first substrate 20a and the second substrate 20c are cover glasses, and are preferably either an organic resin plate or an inorganic glass plate, preferably an inorganic glass plate. The surface of the first substrate 20a serves as an operation surface that is contacted by a user's finger, or the like, when performing a touch operation.

In this way, a structure alternately having two cover glasses and two interlayer fillers can provide excellent impact absorption properties.

The touch sensor 20b is preferably a substrate equipped with a touch sensor (such as a sensor glass), the substrate is preferably any one of an inorganic glass, an organic resin plate, and a resin film, with an inorganic glass or a resin film being preferable. The substrate may be a multilayer structure in which two or more of an inorganic glass, an organic resin plate, and a resin film are laminated.

As shown in Fig. 3, in the touch panel 50, an image display panel 30 may be provided on a surface of the touch sensor 20b opposite to a surface on which the second interlayer filler 10b is laminated, and an optically transparent resin (OCR) 40 may be provided between the touch sensor 20b and the image display panel 30. The optically transparent resin (OCR) 40 may be the interlayer filler of the present invention. In addition, in Fig. 3, instead of the touch sensor 20b, the optically transparent resin (OCR) 40, and the image display panel 30, a configuration in which a touch sensor is directly patterned on the image display device may be used, that is, an on-cell type or in-cell type touch panel may be used.

Examples of the image display panel 30 include an organic EL display element and a liquid crystal display element. The image display panel 30 is preferably provided with a polarizing plate (polarizing film) on the outermost surface on the front side thereof. Additionally, the outermost surface on the front side is the outermost surface on a cover glass side, and the opposite side is also referred to as the back side.

A polarizing plate (polarizing film) generally has a configuration in which a protective film is provided on both surfaces of a polarizer, such as a polyvinyl alcohol resin film. The protective film is made of the above-mentioned resin film, and is preferably any one of a PET film, a COP film, and a TAC film. Therefore, an organic material substrate is generally disposed on the outermost surface on the front side of the image display panel 30.

In addition, even if a polarizing plate (polarizing film) is not provided on the surface of the front side of the image display panel 30, a protective film may be provided on the outermost surface on the front side, and therefore, even in such a case, the outermost surface on the front side of the image display panel 30 is made of an organic material substrate.

The first interlayer filler 10a and the second interlayer filler 10b are the interlayer fillers of the present invention.

The resin compositions constituting the first interlayer filler 10a and the second interlayer filler 10b are of the same material system. Specifically, a resin composition 10a constituting the first interlayer filler 10a and a resin composition 10b constituting the second interlayer filler preferably contain the same type of resin components, and more specifically, both the resin composition 10a and the resin composition 10b preferably contain a polyvinyl acetal resin as a resin component, and more preferably contain a polyvinyl butyral resin. The resin composition 10a and the resin composition 10b preferably contain the same types of additive.

Since the interlayer filler of the present invention can be adjusted to a desired relative permittivity even with a resin composition of the same material system, the first interlayer filler 10a and the second interlayer filler 10b can be of the same material system, which makes it easier to design and manage the interlayer filler.

The moisture content of the first interlayer filler and the second interlayer filler are preferably different. As a result of the moisture content being different, it is possible to adjust the relative permittivities to be different values, thereby achieving excellent touch panel operational sensitivity.

In addition, the thickness of the first interlayer filler and the second interlayer filler is preferably different. As a result of the thickness being different, it is possible to adjust the relative permittivities to be different values, thereby achieving excellent touch panel operational sensitivity.

The relative permittivity of the first interlayer filler is preferably greater than the relative permittivity of the second interlayer filler. Since the first interlayer filler is located close to the operating surface of the touch panel, it preferably has a high relative permittivity from the viewpoint of finger tracking properties.

From this viewpoint, the relative permittivity of the first interlayer filler is preferably 3.9 or more, more preferably 4 or more, and still more preferably 4.5 or more, and preferably 6.0 or less, and more preferably 5.5 or less.

In addition, since the second interlayer filler is located close to the touch sensor or liquid crystal display, it preferably has a low relative permittivity from the viewpoint of preventing malfunction.

From this viewpoint, the second interlayer filler preferably has a relative permittivity of less than 3.9, more preferably 3.5 or less, and still more preferably 3 or less, and preferably 1.5 or more, and more preferably 2.0 or more.

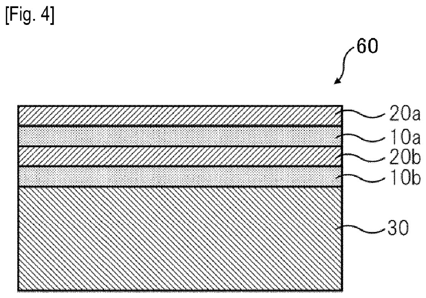

The touch panel of the present invention is not limited to the aspects of fig. 2 and 3, and for example, need not use a second substrate, and as shown in fig. 4, may have a configuration having a first substrate 20a, a first interlayer filler 10a, a touch sensor 20b, a second interlayer filler 10b, and an image display device 30 in this order.

The first substrate 20a, the first interlayer filler 10a, the touch sensor 20b, the second interlayer filler 10b, and the image display device 30 are as described above.

### [EXAMPLES]

The present invention will be described in more detail with reference to examples, but the present invention is not limited to these examples.

The methods for measuring and evaluating the various physical properties in the present invention are as follows.

### (Measurement of Relative Permittivity)

Relative permittivity was measured under the following conditions using the automatic balancing bridge method in accordance with JIS C 2138.
Measurement temperature: 23°C
Frequency: 1 MHz
Electrode material: Tin foil
Number of measurements: n=2, measured at two locations and the average value was calculated
Test room environment: 23°C, 50% RH
Measurement device: "Precision LCR Meter E4980A" manufactured by AGILENT TECHNOLOGIES, INC.

### (Measurement of Moisture Content)

A sample (5 cm long x 5 cm wide) was prepared from the obtained interlayer filler. The measurement sample was measured using a Karl Fischer moisture meter (MKC-610-DT, manufactured by KYOTO ELECTRONICS MANUFACTURING CO., LTD.) in accordance with JIS K7251-B. Based on the measurement results, the moisture content was adjusted as necessary using the method described below, and adjustment and measurement was carried out until a prescribed moisture content was reached.

### (Adjustment of Moisture Content)

The moisture content of the interlayer filler was adjusted as follows.

When increasing the moisture content of the interlayer filler, a sample was adjusted by being placed in a high temperature and humidity chamber (product name "IG420" manufactured by YAMATO SCIENTIFIC CO., LTD.) at a temperature of 30 °C and a humidity of 70% RH.

When decreasing the moisture content of the interlayer filler, a sample was adjusted by being placed in a vacuum dryer (product name "AVO-310N" manufactured by AS ONE CORPORATION) at a temperature of 50 °C and a vacuum degree of 0.1 kPa.

The following raw materials were used to prepare the interlayer filler.
- Thermoplastic resin: polyvinyl butyral resin (S-LEC BH-8 manufactured by SEKISUI CHEMICAL CO., LTD.)
- Plasticizer: triethylene glycol di-2-ethylhexanoate (3GO)
- Antioxidant: 2,6-di-t-butyl-p-cresol (BHT)
- Ultraviolet absorber: TINUVIN 326 manufactured by CIBA SPECIALTY CHEMICALS CO., LTD.
- ITO dispersion: dispersion of 100 parts by mass of ITO particles dispersed in 125 parts by mass of 3GO, 12.5 parts by mass of ethanol, and 10 parts by mass of polyoxyethylene nonylphenyl ether phosphate (ITO concentration: approximately 40% by mass).

Resin composition 1 and resin composition 2 shown below were used as the resin compositions for forming the interlayer filler.

### [Table 1]

**Table 1**

| | | | Resin composition 1 | Resin composition 2 |
|---|---|---|---|---|
| Polyvinyl butyral resin | Type | - | BH-8 | BH-8 |
| | Amount | Parts by mass | 100 | 100 |
| Plasticizer | Type | - | 3GO | 3GO |
| | Amount | Parts by mass | 35 | 35 |
| Antioxidant | Type | - | BHT | BHT |
| | Amount | Parts by mass | 0.2 | 0.2 |
| Ultraviolet absorber | Type | - | Tinuvin326 | Tinuvin326 |
| | Amount | Parts by mass | 0.2 | 0.2 |
| ITO dispersion | Concentration | mass% | - | 0.04 |

The concentration of the ITO dispersion in resin composition 2 represents the concentration of the ITO dispersion based on the entire resin composition.

### (Preparation of Interlayer Filler: Sample 1)

Resin composition 1 in Table 1, which was a mixture of polyvinyl butyral resin, a plasticizer, an antioxidant, and an ultraviolet absorber, was press molded by using a heated molding machine at 180°C and 10 MPa to obtain a film with a thickness of 200 µm, which was used as the interlayer filler of sample 1. The interlayer filler of sample 1 was adjusted to each moisture content shown in Table 2, and the relative permittivity was measured.

### (Preparation of Interlayer Filler: Samples 2 to 6)

Interlayer fillers of samples 2 to 6 were obtained in the same manner as that in the above-mentioned method for preparing the interlayer filler of sample 1, except that the type and thickness of the resin composition used were changed as shown in Table 2. The interlayer fillers of samples 2 to 6 were adjusted to each moisture content shown in Table 2, and the relative permittivity was measured.

### (Interlayer Filler: Samples 7 and 8)

Changes in relative permittivity in hot and humid environments (environments with various changes in humidity and temperature) were investigated by using a high permittivity OCA (acrylic adhesive; relative permittivity: 4.5) as sample 7 and a low permittivity OCA (acrylic adhesive; relative permittivity: 2.5) as sample 8. The results are shown in Table 3.

### (Examples 1 to 13)

The interlayer fillers of samples 1 to 6 were adjusted to the moisture content values shown in Table 4, and the relative permittivity was measured.

### [Table 2]

**Table 2**

| | Interlayer filler | | | | | |
|---|---|---|---|---|---|---|
| | Sample 1 | Sample 2 | Sample 3 | Sample 4 | Sample 5 | Sample 6 |
| Type of resin composition | Resin composition 1 | Resin composition 1 | Resin composition 1 | Resin composition 2 | Resin composition 2 | Resin composition 2 |
| Thickness (µm) | 200 | 380 | 760 | 200 | 380 | 760 |
| Relative permittivity at a moisture content of 0% | 2.28 | 2.99 | 3.7 | 3.38 | 4.06 | 4.80 |
| Relative permittivity at a moisture content of 0.25% | 2.44 | 3.07 | 3.81 | 3.54 | 4.17 | 4.92 |
| Relative permittivity at a moisture content of 0.5% | 2.61 | 3.17 | 3.92 | 3.71 | 4.27 | 5.03 |

### [Table 3]

**Table 3**

| | Interlayer filler | |
|---|---|---|
| Resin type | High permittivity OCA | Low permittivity OCA |
| Relative permittivity | 4.5 | 2.5 |
| Change under hot and humid environment | None | None |

### [Table 4]

**Table 4**

| | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|
| Sample type | Sample 3 | Sample 3 | Sample 5 | Sample 5 | Sample 6 | Sample 6 | Sample 1 | Sample 1 | Sample 2 | Sample 2 | Sample 3 | Sample 4 | Sample 4 |
| Moisture content (%) | 0.4 | 0.5 | 0 | 0.5 | 0 | 0.5 | 0 | 0.5 | 0 | 0.5 | 0 | 0 | 0.5 |
| Relative permittivity | 3.88 | 3.92 | 4.06 | 4.27 | 4.80 | 5.03 | 2.28 | 2.61 | 2.99 | 3.17 | 3.70 | 3.38 | 3.71 |

Samples 1 to 6 are the interlayer fillers of the present invention, in which the relative permittivity at a moisture content of 0% is 2.0 to 5.0, the relative permittivity at a moisture content of 0.5% is 2.5 to 5.5, and the relative permittivity at a moisture content of 0.5% is greater than the relative permittivity at a moisture content of 0%. In addition, the results of samples 1 to 6 show that even when the material system of the resin composition for forming the interlayer filler is the same, the relative permittivity can be adjusted to a desired range by changing the moisture content and thickness.

Samples 7 and 8 are general adhesives used for touch panels, but the relative permittivity did not change even when the hot and humid environment was changed, and thus, it was not possible to adjust the relative permittivity by changing the moisture content, etc., in the manner of samples 1 to 6.

### [DESCRIPTION OF REFERENCE SYMBOLS]

10a First interlayer filler
10b Second interlayer filler
20a First substrate
20b Touch sensor
20c Second substrate
30 Image display device
40 Optically transparent resin (OCR)

## Claims

1. An interlayer filler, wherein the range of the relative permittivity at 1 MHz is 2.0 or more and 5.0 or less when the moisture content is 0%,
the range of the relative permittivity at 1 MHz is 2.5 or more and 5.5 or less when the moisture content is 0.5%, and the relative permittivity when the moisture content is 0.5% is greater than the relative permittivity when the moisture content is 0%.

2. The interlayer filler according to claim 1, wherein the relative permittivity is 3.9 or more.

3. The interlayer filler according to claim 2, wherein the thickness is 380 µm or more and 760 µm or less.

4. The interlayer filler according to claim 1, wherein the relative permittivity is less than 3.9.

5. The interlayer filler according to claim 4, wherein the thickness is 380 µm or more and 760 µm or less.

6. The interlayer filler according to any one of claims 1 to 5, comprising a thermoplastic resin.

7. The interlayer filler according to claim 6, further comprising a plasticizer.

8. A laminate comprising the interlayer filler according to any one of claims 1 to 5, and at least one transparent substrate.

9. A laminated glass comprising the interlayer filler according to any one of claims 1 to 5.

10. An image display device comprising the interlayer filler according to any one of claims 1 to 5.

11. A touch panel comprising at least a first substrate, a first interlayer filler, a second substrate, a second interlayer filler, and a touch sensor, in that order, wherein the relative permittivity of the first interlayer filler and the second interlayer filler is different, and the material system of a resin composition constituting the first interlayer filler and the second interlayer filler is the same.

12. The touch panel according to claim 11, wherein the moisture content of the first interlayer filler and the second interlayer filler is different.

13. The touch panel according to claim 11 or 12, wherein the thickness of the first interlayer filler and the second interlayer filler is different.
